(19) Europäisches Patentamt
European Patent Office
Office européen des brevets

(11) **EP 4 346 202 A1**

(12) **EUROPEAN PATENT APPLICATION**

(43) Date of publication:
**03.04.2024 Bulletin 2024/14**

(21) Application number: **22306424.7**

(22) Date of filing: **27.09.2022**

(51) International Patent Classification (IPC):
**H04N 19/11** (2014.01)   **H04N 19/14** (2014.01)
**H04N 19/176** (2014.01)   **H04N 19/593** (2014.01)

(52) Cooperative Patent Classification (CPC):
**H04N 19/176; H04N 19/11; H04N 19/14;**
**H04N 19/593**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventors:
• **ANDRIVON, PIERRE**
  **35340 LIFFRE (FR)**
• **LE LEANNEC, FABRICE**
  **35830 BETTON (FR)**
• **RADOSAVLJEVIC, MILOS**
  **35000 RENNES (FR)**

(74) Representative: **RVDB Rennes**
  **44 rue Lariboisière**
  **35235 Thorigné-Fouillard (FR)**

(54) **ENCODING/DECODING VIDEO PICTURE DATA**

(57)    The present application relates to encoding/decoding a block of samples of a video picture in which a DIMD mode is derived for luma and chroma samples of a sample block to be predicted by filtering samples of at least one template area, said filtering using filtering windows centered at middle line sample positions of the at least one template area filtering samples in at least one shaped template area. An integer number of middle line sample positions of the at least one template area at which the filtering windows are centered, is lower than a total integer number of middle line sample positions of the at least one template area.

**Fig. 14**

**Description**

<u>FIELD</u>

The present application generally relates to video picture encoding and decoding. Particularly, but not exclusively, the technical field of the present application is related to intra prediction blocks of a video picture.

<u>BACKGROUND</u>

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

A pixel corresponds to the smallest display unit on a screen, which can be composed of one or more sources of light (1 for monochrome screen or 3 or more for colour screens).

A video picture, also denoted frame or picture frame, comprises at least one component (also called picture component, or channel) determined by a specific picture/video format which specifies all information relative to pixel values and all information which may be used by a display unit and/or any other device to display and/or to decode video picture data related to said video picture.

A video picture comprises at least one component usually expressed in the shape of an array of samples.

A monochrome video picture comprises a single component and a color video picture may comprise three components.

For example, a color video picture may comprise a luma (or luminance) component and two chroma components when the picture/video format is the well-known (Y,Cb,Cr) format or may comprise three color components (one for Red, one for Green and one for Blue) when the picture/video format is the well-known (R,G,B) format.

Each component of a video picture may comprise a number of samples relative to a number of pixels of a screen on which the video picture is intended to be display. In variants, the number of samples comprises in a component may be a multiple (or fraction) of a number of samples comprised in another component of a same video picture.

For example, in the case of a video format comprising a luma component and two chroma component like the (Y,Cb,Cr) format, dependent on the color format considered, the chroma component may contain half the number of samples in width and/or height, relative to the luma component.

A sample is the smallest visual information unit of a component composing a video picture. A sample value may be, for example a luma or chroma value or a colour value of a (R, G, B) format.

A pixel value is the value of a pixel of a screen. A pixel value may be represented by one sample for monochrome video picture and by multiple co-located samples for color video picture. Co-located samples associated with a pixel mean samples corresponding to the location of a pixel in the screen.

It is common to consider a video picture as being a set of pixel values, each pixel being represented by at least one sample.

A block of a video picture is a set of samples of one component of the video picture. A block of at least one luma sample, in short a luma block, or a block of at least one chroma sample, in short a chroma block, may be considered when the picture/video format is the well-known (Y,Cb,Cr) format, or a block of at least one color sample when the picture/video format is the well-known (R, G, B) format.

The at least one exemplary embodiment is not limited to a particular picture/video format.

In the state-of-the-art video compression systems such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.inVrec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The CTU division of a video picture forms a grid of fixed size CTUs, namely a CTU grid, which upper and left boundaries spatially coincide with the top and left borders of the video picture. The CTU grid represents a spatial partition of the video picture.

In VVC and HEVC, the CTU size (CTU width and CTU height) of all the CTUs of a CTU grid equals a same default CTU size (default CTU width **CTU DW** and default CTU height **CTU DH).** For example, the default CTU size (default CTU height, default CTU width) may equal to 128 **(CTU DW=CTU DH**=128). A default CTU size (height, width) is encoded into the bitstream, for example at a sequence level in the Sequence Parameter Set (SPS).

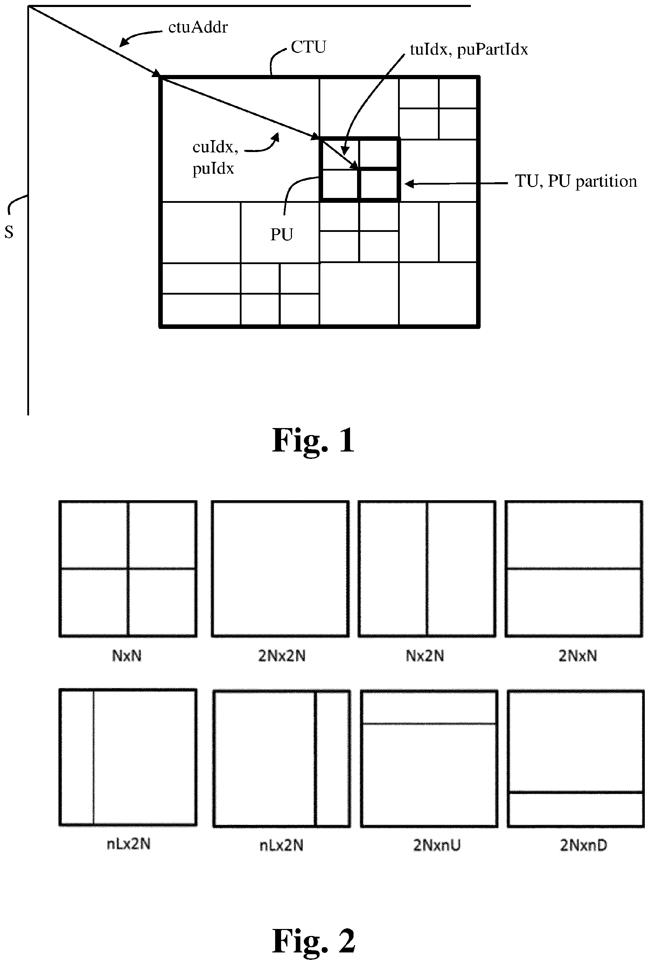

The spatial position of a CTU in a CTU grid is determined from a CTU address **ctuAddr** defining a spatial position of the top-left corner of a CTU from an origin. As illustrated on **Figure 1,** the CTU address may define the spatial position from the top-left corner of a higher-level spatial structure S containing the CTU.

A coding tree is associated with each CTU to determine a tree-division of the CTU.

As illustrated on **Figure 1,** in HEVC, the coding tree is a quad-tree division of a CTU, where each leaf is called a Coding Unit (CU). The spatial position of a CU in the video picture is defined by a CU index **culdx** indicating a spatial position from the top-left corner of the CTU. A CU is spatially partitioned into one or more Prediction Units (PU). The spatial position of a PU in the video picture VP is defined by a PU index **puldx** defining a spatial position from the top-left corner of the CTU and the spatial position of an element of a partitioned PU is defined by a PU partition index **puPartIdx** defining a spatial position from the top-left corner of a PU. Each PU is assigned some intra or inter prediction data.

The intra or inter coding mode is assigned on the CU level. That means that a same intra/inter coding mode is assigned to each PU of a CU, though the prediction parameters varying from PU to PU.

A CU may be also spatially partitioned into one or more Transform Units (TU), according to a quad-tree called the transform tree. Transform Units are the leaves of the transform tree. The spatial position of a TU in the video picture is defined by a TU index **tuldx** defining a spatial position from the top-left corner of a CU. Each TU is assigned some transform parameters. The transform type is assigned on the TU level, and 2D separate transform is performed at TU level during the coding or decoding of a picture block.

The PU Partition types existing in HEVC are illustrated on **Figure 2.** They include square partitions (2Nx2N and NxN), which are the only ones used in both Intra and Inter prediction CUs, symmetric non-square partitions (2NxN, Nx2N, used only in Inter prediction CUs), and asymmetric Partitions (used only in Inter prediction CUs). For instance, the PU type 2NxnU stands for an asymmetric horizontal partitioning of the PU, where the smaller partition lies on the top of the PU. According to another example, PU type 2NxnL stands for an asymmetric horizontal partitioning of the PU, where the smaller partition lies on the top of the PU.

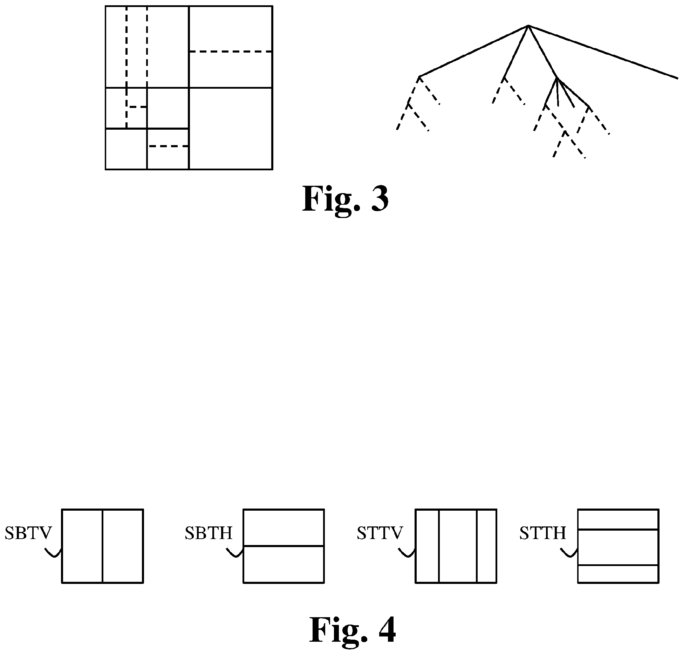

As illustrated on **Figure 3,** in VVC, the coding tree starts from a root node, i.e. the CTU. Next, a quad-tree (or quaternary tree) split divides the root node into 4 nodes corresponding to 4 sub-blocks of equal sizes (solid lines). Next, the quaternary tree (or quad-tree) leaves can then be further partitioned by a so-called multi-type tree, which involves a binary or ternary split according to one of 4 split modes illustrated on **Figure 4.** These split types are the vertical and horizontal binary split modes, noted SBTV and SBTH and the vertical and horizontal ternary split modes SPTTV and STTH.

The leaves of the coding tree of a CTU are CU in the case of a joint coding tree shared by luma and chroma components.

Contrary to HEVC, in VVC, in most cases, CU, PU and TU have equal size, which means coding units are generally not partitioned into PU or TU, except in some specific coding modes.

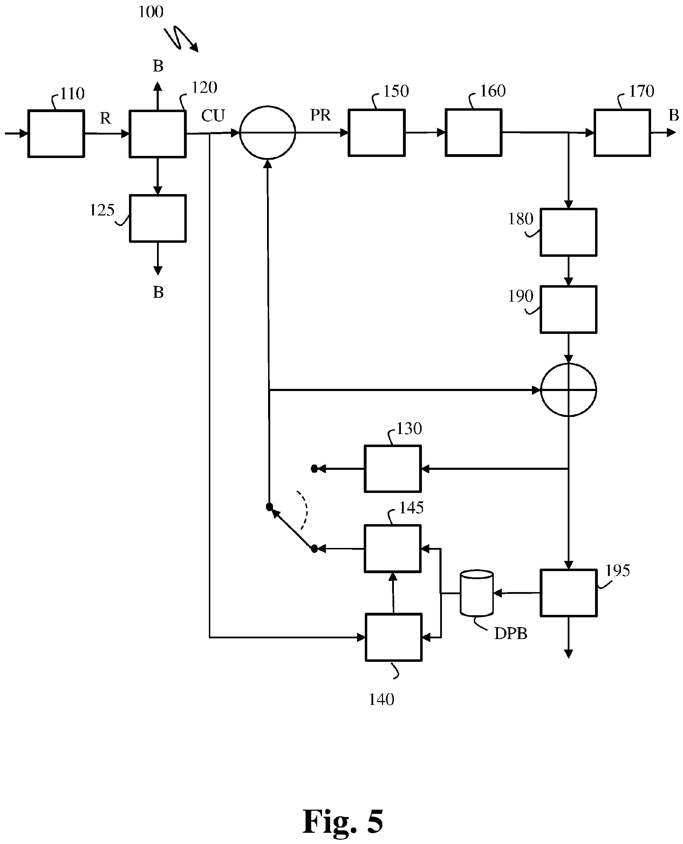

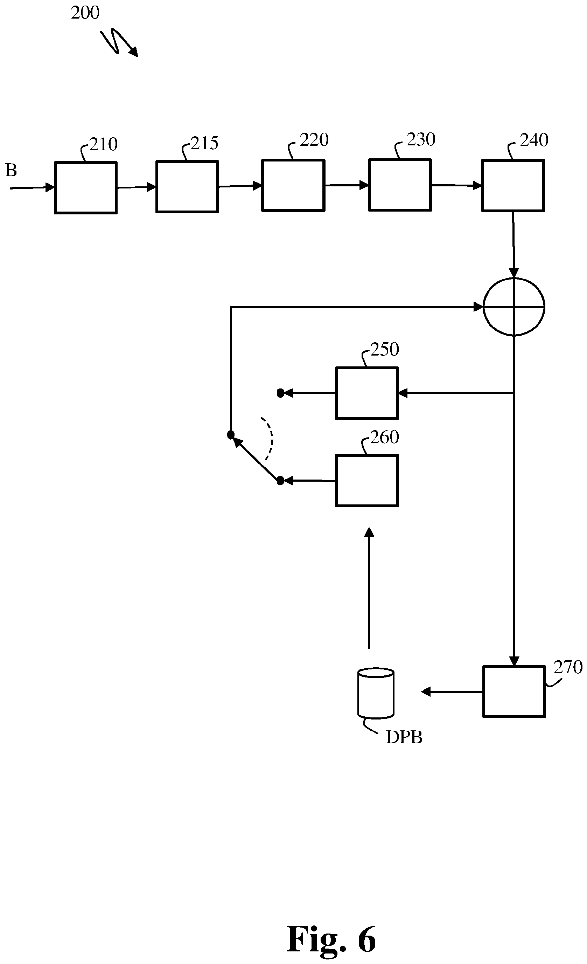

**Figures 5** and **6** provide an overview of video encoding/decoding methods used in current video standard compression systems like HEVC or VVC for example.

**Figure 5** shows a schematic block diagram of steps of a method 100 of encoding a video picture VP in accordance with prior art.

In step 110, a video picture VP is partitioned into blocks of samples and partitioning information data is signaled into a bitstream. Each block comprises samples of one component of the video picture VP. The blocks thus comprise samples of each component defining the video picture VP.

For example, in HEVC, a picture is divided into Coding Tree Units (CTU). Each CTU may be further subdivided using a quad-tree division, where each leaf of the quad-tree is denoted a Coding Unit (CU). The partitioning information data may then comprise data describing the CTU and the quad-tree subdivision of each CTU.

Each block of samples, in short block, may then be either a CU (if the CU comprises a single PU) or a PU of a CU.

Each current block is encoded along an encoding loop also called "in loop" using either an intra or inter prediction mode.

Intra prediction (step 120) used intra prediction data. Intra prediction consists in predicting a current block by means of an intra prediction block based on already encoded, decoded and reconstructed samples located in a so-called L-shaped template area defined around the current block, typically on the top on the left and top-left of the current block. Intra prediction is performed in the spatial domain.

In inter-prediction mode, motion estimation (step 130) and motion compensation (135) are performed. Motion estimation searches, in one or more reference picture(s) used to predictively encode the current video picture, a reference block that is a good predictor of the current block. In uni-directional motion estimation/compensation, a candidate reference block belongs to a single reference picture of a reference picture list denoted L0 or L1, and in bidirectional motion estimation/compensation, the candidate reference block is derived from a reference block of the reference picture list L0 and a reference block of the reference picture list L1.

For instance, a good predictor of the current block is a candidate reference block which is similar to the current block. It may also correspond to a reference block that provides a good trade-off between its similarity to current block, and the rate cost of motion information needed to indicate its use for the temporal prediction of current block.

The output of the motion estimation step 130 is inter-prediction data comprising motion information associated to the current block and other information used for obtaining a same prediction block at the encoding/decoding side. Typically motion information comprises one motion vector and a reference picture index for uni-directional estimation/compensation and two motion vectors and two reference picture indices for bi-direction estimation/compensation. Next, motion compensation (step 135) obtains a prediction block by means of the motion vector(s) and reference picture index (indices) determined by the motion estimation step 130. Basically, the reference block belonging to a selected reference picture and pointed to by a motion vector may be used as the prediction block of the current block. Furthermore, since motion vectors are expressed in fractions of integer pixel positions (which is known as sub-pel accuracy motion vector representation), motion compensation generally involves a spatial interpolation of some reconstructed samples of the reference picture to compute the prediction block.

Prediction information data is signaled into the bitstream. The prediction information may comprise prediction mode (intra or inter or skip), intra/inter prediction data and any other information used for obtaining a same prediction block at the decoding side.

The method 100 selects one prediction mode (the intra or inter prediction mode) by optimizing a rate-distortion trade-off taking into account the encoding of a prediction residual block calculated, for example, by subtracting a candidate prediction block from the current block, and the signaling of prediction information data required for determining said candidate prediction block at the decoding side.

Usually, the best prediction mode is given as being the prediction mode of a best coding mode p* for a current block given by:

$$p^* = \underset{p \in P}{\mathrm{Argmin}}\{RD_{cost}(p)\}$$

where P is the set of all candidate coding modes for the current block, $p$ represents a candidate coding mode in that set, $RD_{cost}(p)$ is a rate-distortion cost of candidate coding mode $p$, typically expressed as:

$$RD_{cost(p)} = D(p) + \lambda.R(p)$$

$D(p)$ is the distortion between the current block and a reconstructed block obtained after encoding/decoding the current block with the candidate coding mode $p$, $R(p)$ is a rate cost associated with the coding of the current block with coding mode $p$, and $\lambda$ is the Lagrange parameter representing the rate constraint for coding the current block and typically computed from a quantization parameter used for encoding the current block.

The current block is usually encoded from a prediction residual block PR. More precisely, a prediction residual block PR is calculated, for example, by subtracting the best prediction block from the current block. The prediction residual block PR is then transformed (step 140) by using, for example, a DCT (discrete cosine transform) or DST (discrete sinus transform) type transform, or any other appropriate transform, and the obtained transformed coefficient block is quantized (step 150).

In variant, the method 100 may also skip the transform step 140 and apply quantization (step 150) directly to the prediction residual block PR, according to the so-called transform-skip coding mode.

Quantized transform coefficient block (or quantized prediction residual block) is entropy encoded into the bitstream (step 160).

Next, the quantized transform coefficient block (or the quantized residual block) is de-quantized (step 170) and inverse transformed (180) (or not) as part of the encoding loop, leading to a decoded prediction residual block. The decoded prediction residual block and the prediction block are then combined, typically summed, which provides the reconstructed block.

Other information data may also be entropy encoded in step 160 for encoding a current block of the video picture VP.

In-loop filters (step 190) may be applied to a reconstructed picture (comprising reconstructed blocks) to reduce compression artefacts. Loop filters may apply after all picture blocks are reconstructed. For instance, they consist in deblocking filter, Sample Adaptive Offset (SAO) or Adaptive Loop Filter (ALF).

The reconstructed blocks or the filtered reconstructed blocks form a reference picture that may be stored into a decoded picture buffer (DPB) so that it can be used as a reference picture for the encoding of a next current block of the video picture VP, or of a next vide picture to encode.

**Figure 6** shows a schematic block diagram of steps of a method 200 of decoding a video picture VP in accordance with prior art.

In step 210, partitioning information data, prediction information data and quantized transform coefficient block (or quantized residual block) are obtained by entropy decoding a bitstream of encoded video picture data. For instance, this bitstream has been generated in accordance with the method 100.

Other information data may also be entropy decoded for decoding from the bitstream a current block of the video picture VP.

In step 220, a reconstructed picture is divided into current blocks based on the partitioning information. Each current block is entropy decoded from the bitstream along a decoding loop also called "in loop". Each decoded current block is either a quantized transform coefficient block or quantized prediction residual block.

In step 230, the current block is de-quantized and possibly inverse transformed (step 240), to obtain a decoded prediction residual block.

On the other hand, the prediction information data is used to predict the current block. A prediction block is obtained through its intra prediction (step 250) or its motion-compensated temporal prediction (step 260). The prediction process performed at the decoding side is identical to that of the encoding side.

Next, the decoded prediction residual block and the prediction block are then combined, typically summed, which provides a reconstructed block.

In step 270, in-loop filters may apply to a reconstructed picture (comprising reconstructed blocks) and the reconstructed blocks or the filtered reconstructed blocks form a reference picture that may be stored into a decoded picture buffer (DPB) as above discussed **(Figure 5).**

In VVC, motion information is stored per 4x4 blocks in each video picture. This means once a reference picture is stored in the decoded picture buffer (DPB, **Figure 5** or **6**), motion vectors and reference pictures indices used for the temporal prediction of video picture blocks are stored on a 4x4 block basis. They can serve as temporal prediction of motion information for encoding/decoding a subsequent inter-prediction video picture.

To reduce cross-component redundancy, VVC defines so-called Linear-Model based intra-prediction mode (LM modes).

One of them is a so-called Cross-Component Linear Model (CCLM) that derives a linear-model based predictor, in short LM predictor, comprising predicted chroma samples $\text{pred}_C(i,j)$ based on co-located reconstructed luma samples $\text{rec}'_L(i,j)$ of a same CU by using a linear model:

$$\text{pred}_C(i,\ j) = \alpha \cdot \text{rec}_L{}'(i,\ j) + \beta$$

where $\alpha$ and $\beta$ are linear parameters of the linear model which are derived from reference samples, i.e. reconstructed chroma and luma samples.

The reconstructed luma samples $\text{rec}'_L(i,j)$ are downsampled after filtering to match the CU chroma size.

In VVC, three CCLM modes, denoted CCLM_LT, CCLM_T and CCLM_L are specified. These three CCLM modes differ with respect to the location of the reference samples that are used for linear parameters derivation. Reference samples from the top boundary are involved in the CCLM_T mode and the reference samples from the left boundary are involved in the CCLM_L mode. In the CCLM_LT mode, reference samples of both the top boundary and the left boundary are used.

Overall, the prediction process of CCLM modes consists of three steps: 1) Down-sampling of the luma block and its neighboring reconstructed luma samples $\text{rec}'_L(i,j)$ to match the size of corresponding chroma block, 2) linear parameters derivation based on the neighboring reconstructed luma samples, 3) Application of equation (10) to generate the chroma intra prediction samples (predicted chroma block).

Another LM modes is the so-called Multi-Model Linear Model (MMLM, [K. Zhan et al, "Enhanced Cross-component Linear Model Intra Prediction", JVET-D0110, San Diego, October 2016]). MMLM is an extension of CCLM because more than one linear model is derived from co-located reconstructed luma samples $\text{rec}'_L(i,j)$. In MMLM, neighboring reconstructed luma samples and neighboring chroma samples are classified into several groups, each group is used as a training set to derive linear parameters of a linear model (i.e., particular $\alpha$ and $\beta$ are derived for a particular group). Furthermore, the samples of a current luma block are also classified based on the same rule for the classification of neighboring luma samples. The neighboring samples are, for example, classified into M groups. The MMLM method with $M=2$ and M=3 are designed as two appended LM modes for chroma named MMLM2 and MMLM3, besides the original LM mode (CCLM). The encoder chooses the optimal LM mode in a Rate/Distortion Optimization process and signals the best LM mode. For example, when M is equal to 2, a threshold is calculated as the average value of the neighboring reconstructed luma samples. A neighboring reconstructed sample $rec'_L[x,y]$ lower than or equal to the threshold is classified into group 1; while a neighboring reconstructed sample $rec'_L[x,y]$ greater than the threshold is classified into group 2.

The two LM predictors are then derived as:

$$\begin{cases} Pred_C[x,y] = \alpha_1 \times rec'_L[x,y] + \beta_1 & if \ rec'_L[x,y] \leq Threshold \\ Pred_C[x,y] = \alpha_2 \times rec'_L[x,y] + \beta_2 & if \ rec'_L[x,y] > Threshold \end{cases}$$

MMLM is included in the Enhanced Compression Model (ECM) (M. Coban et al, "Algorithm description of Enhanced Compression Model 4 (ECM 4)", JVET-Y2025, Online, July 2021) exploring improvement of compression performance beyond VVC, where the neighbouring reconstructed samples are classified into two classes using a threshold which is the average of the luma neighboring reconstructed samples. The linear model of each class is derived using the Least Mean Square (LMS) method.

VVC further defines a Decoder-side Intra Mode Derivation (DIMD) mode for both luma and chroma samples. DIMD mode is not a linear-model based mode, in short non-LM mode, i.e. an intra prediction mode that does not refer to a linear model such as, for instance planar mode or Direct mode (DM).

DM is an intra prediction mode that uses the mean sample value of the reference samples to the left and above the block for prediction generation.

Planar mode is a weighted average of 4 reference sample values (picked up as orthogonal projections of the sample to predict in the top and left reconstructed areas). Horizontal and vertical modes use respectively copy of left and above reconstructed samples without interpolation to predict samples rows and columns, respectively.

For luma sample prediction, the use of DIMD luma mode is signalled in a bitstream by a single flag and the intra predictor is not explicitly signalled in the bitstream.

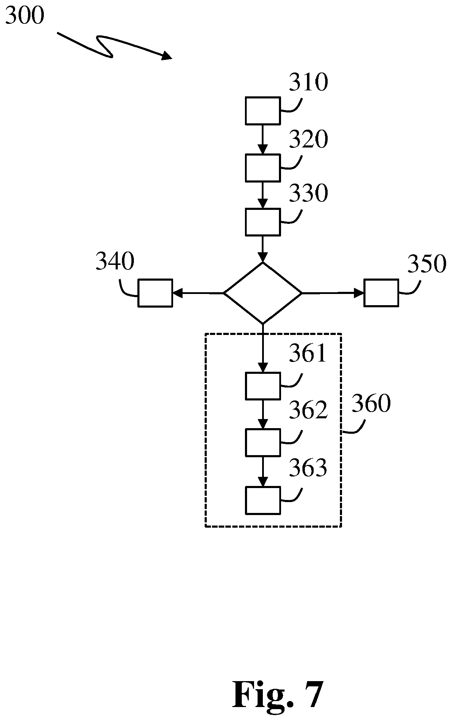

**Figure 7** illustrates schematically a block diagram of a method 300 of deriving DIMD luma mode in accordance with prior art.

Basically, a DIMD luma mode (predictor) is derived by using a gradient analysis of neighbouring reconstructed luma samples i.e. a gradient analysis of luma samples located in a L-shaped template area defined around a current block of samples. If DIMD luma mode is not enabled, intra-prediction mode may be parsed from bitstream as in classical intra-prediction mode. DIMD luma mode is implicit. Thus, DIMD luma mode is derived during reconstruction process identically at the encoder and decoder sides.

In step 310, intra above and intra left available samples around a luma block to be predicted are determined and a L-shaped template area is thus determined.

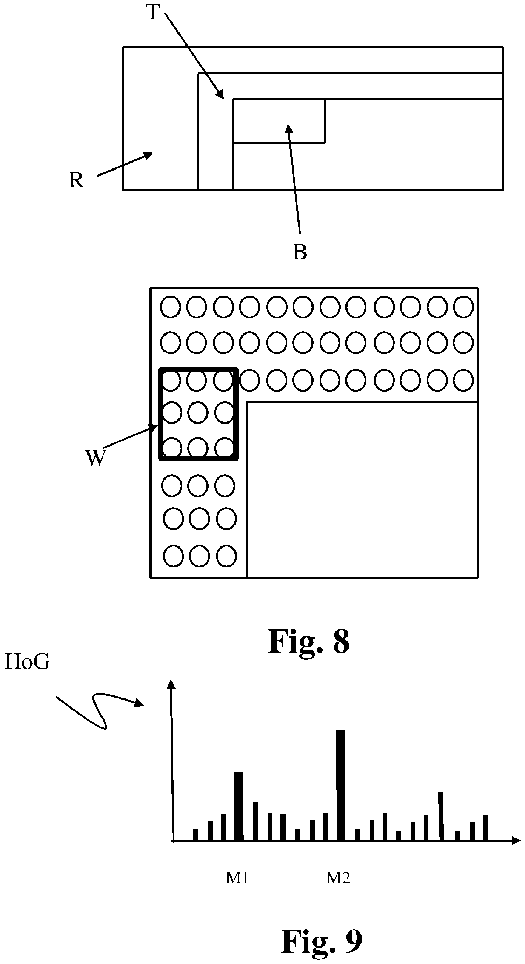

For example, as illustrated on **Figure 8,** a 3-samples wide (in width or height) L-shaped template area T composed of left, above and above-left reconstructed luma samples of reconstructed area R adjacent to a current block B (current CU), is defined.

In step 320, one Histogram of Gradients (HoG) is built as follows.

First, samples of the L-shaped template area T are filtered, said filtering using filtering windows W centred at middle line sample positions of the L-shaped template area T. An amplitude and an angle of a luminance direction (orientation) are assigned to each middle line sample of the L-shaped template area T.

For example, when edge detection filters (3x3 horizontal and vertical Sobel filters) are used for filtering samples of the L-shaped template area T, an amplitude and angle of a luminance direction are given by:

$$angle = \arctan(G_{hor}/G_{ver})$$

$$amplitude = |G_{hor}| + |G_{hor}|$$

with $G_{hor}$ and $G_{ver}$ are the intensity of pure horizontal and vertical directions as calculated by Sobel filters. Each couple of amplitude and angle of a luminance direction corresponds to one angular intra-prediction mode.

Next, the HoG is calculated where each entry (angle) corresponds to an angular intra-prediction mode and cumulated amplitudes are stored.

In step 330, at most two angular intra-prediction modes M1 and M2 are selected from the HoG.

For example, as illustrated on **Figure 9,** the two most represented angular intra-prediction modes M1 and M2 have the largest histogram amplitude values.

It may happen that 0, 1 or 2 angular intra-prediction mode be selected from the HoG. For example, none of the angular intra-prediction mode is selected if none of the cumulative amplitudes of the HoG is greater than a threshold.

When none of angular intra-prediction mode is selected, then in step 340, the planar mode is the intra-prediction mode use as intra predictor of the luma part of the current block to be predicted.

When a single angular intra-prediction mode is selected, then in step 350, this angular intra-prediction mode is the intra-prediction mode used as intra predictor of the luma part of the current block to be predicted.

When two angular intra-prediction modes are selected (M1 and M2), then in step 360, the DIMD luma mode is determined by blending (mixing, fusing) three luma predictors: two intra predictors derived from the two selected angular intra-prediction modes M1 and M2, and a planar predictor (M. Abdoli et al, "Non-CE3: Decoder-side Intra Mode Derivation with Prediction Fusion Using Planar", JVET-O0449, Gothenburg, July 2019).

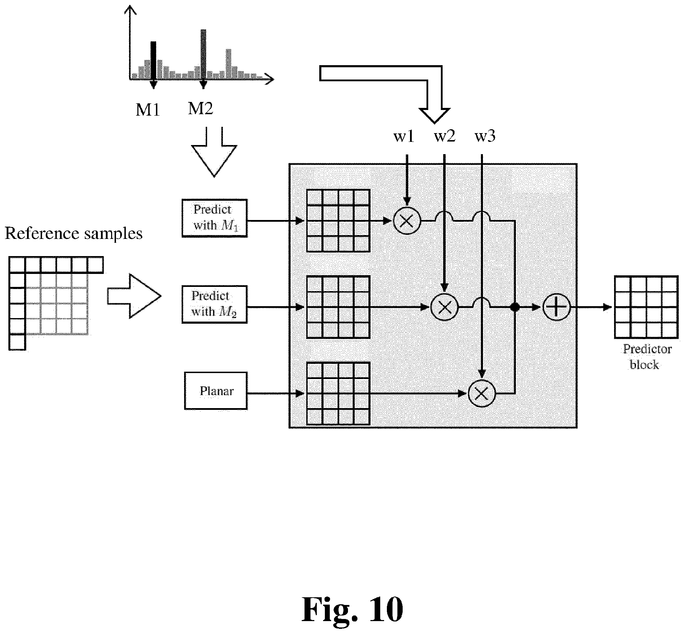

As illustrated on **Figure 10,** The blending is defined as a weighted average of these three intra predictors that uses three weights $w_1, w_2, w_3$ derived (step 361) from the selected angular intra prediction amplitudes' ratio by:

$$w_1 = \frac{43}{64} \times \frac{\text{ampl}(M1)}{\text{ampl}(M1)+\text{ampl}(M2)}$$
$$w_2 = \frac{43}{64} \times \frac{\text{ampl}(M2)}{\text{ampl}(M1)+\text{ampl}(M2)} \qquad (1)$$
$$w_3 = \frac{21}{64}$$

With weights $w_1$ and $w_2$ for the two angular intra-prediction modes M1 and M2 and the weight $w_3$ for the planar mode i.e. 21/64 with 6 bits integer precision. In step 362, intra predictors of the current luma block are calculated from the two selected angular intra-prediction modes M1 and M2 and the planar mode. Finally, in step 363, the DIMD predictor is determined by blending the three intra-predictors using the weights.

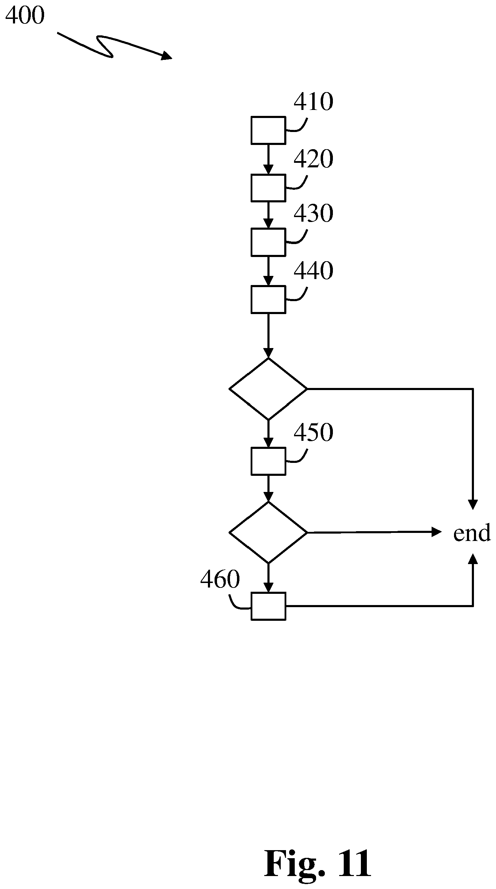

**Figure 11** illustrates schematically a block diagram of a method 400 of deriving a DIMD chroma mode in accordance with prior art.

Basically, for deriving DIMD chroma mode, a similar method used for deriving DIMD luma mode is applied on co-located reconstructed luma samples, i.e. a gradient analysis of co-located reconstructed luma samples in a L-shaped template area defined around the current block of chroma samples.

The use of DIMD chroma mode is signalled in a bitstream by a single flag and the intra predictor is not explicitly signalled in the bitstream but derived by using the gradient analysis of co-located reconstructed luma samples. DIMD chroma mode is implicit. Thus, intra predictor is derived from a DIMD chroma mode during reconstruction process identically at the encoder and decoder sides.

In step 410, the method 400 determines if reconstructed luma samples are available. These reconstructed luma samples are either co-located to the chroma block to be predicted or to a L-shaped template area around said chroma block. A L-shaped template area is formed from the available L-shaped template area.

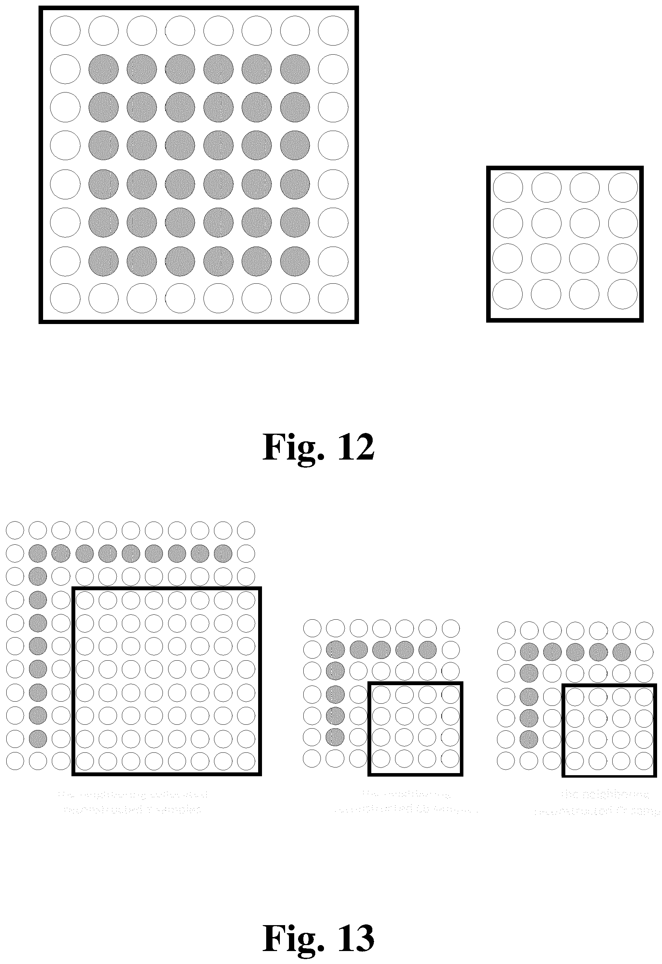

In step 420, a histogram of gradients HoG is built as in step 320 for available co-located reconstructed luma samples in the L-shaped area. Specifically, a horizontal gradient and a vertical gradient are calculated for each co-located reconstructed luma sample (grey circles on **Figure 12,** extracted from JVET-Y0092) and the HoG is built from said horizontal and vertical gradients.

In step 430, the amplitudes of available chroma samples in a L-shaped area around the chroma block are cumulated to the HoG where each entry corresponds to an orientation i.e. an angular intra-prediction mode (same as for the luma HoG counter-part).

In a variant, the HoG may be calculated by cumulated amplitude values over reconstructed Y, Cb and Cr samples of the L-shaped template areas **(Figure 13),** i.e. a HoG derived by fusing a first HoG calculated from the neighbouring co-located luma samples of a L-shaped template area (left part of **Figure 13),** a second HoG calculated from Cb samples of a L-shaped template area (middle part of **Figure 13)** and a third HoG calculated from neighbouring reconstructed Cr samples (right part of **Figure 13).**

In step 440, an angular intra-prediction mode corresponding to the largest histogram amplitude value is selected from the HoG as the first DIMD chroma mode.

When the DIMD chroma mode is not a Direct mode (DM) then method 400 ends and the DIMD chroma mode is the first DIMD chroma mode.

Direct mode (DM) is a chroma intra prediction mode corresponding to the intra prediction mode of co-located reconstructed luma samples.

When the first DIMD chroma mode is a Direct Mode (DM), then in step 450 a second DIMD chroma mode is selected as an angular intra-prediction mode corresponding to the secondly largest histogram amplitude value.

When the first DIMD chroma mode is not equal to the second DIMD chroma mode, then the methods ends and the DIMD chroma mode is the second DIMD chroma mode.

When the first DIMD chroma mode is equal to the second DIMD chroma mode, then in step 460, the DIMD chroma mode is the Direct Coding (DC).

A non-linear model based predictor, in short non-LM predictor, of the chroma block is then derived from a non-LM mode selected among five default modes and the DIMD chroma mode. Chroma predictors are derived from those non-LM modes and the selected non-LM mode corresponds to the non-LM predictor that minimizes a rate distortion trade-off.

The five default modes are DC, Planar, Direct Mode, horizontal and vertical angular predictions.

The non-LM predictor of the chroma block derived from the selected non-LM mode is then fused (blended, mixed) with the LM predictor derived from the MMLM mode as follows:

$$pred = (w0 * pred0 + w1 * pred1) \gg \text{shift}$$

where *pred*0 is the predictor obtained by applying the non-LM mode, *pred*1 is the predictor obtained by applying the LM mode and *pred* is the final predictor of the chroma block. For I slices (Intra-codes slices), the two weights, *w*0 and *w*1 are determined by the intra prediction mode of adjacent chroma blocks and shift is set equal to 2. Specifically, when the above and left adjacent blocks are both coded with LM modes, {*w*0, *w*1}={1, 3}; when the above and left adjacent blocks are both coded with non-LM modes, {w0, w1}={3, 1}; otherwise, {w0, w1}={2, 2}. For non-I slices, w0 and w1 are both set equal to 2.

If a non-LM mode is selected, one flag is signaled to indicate whether the fusion is applied.

In a variant, for I slices, i.e., intra-coded slice, non-LM predictors derived from the DM mode, the four default modes and the DIMD chroma mode can be fused with a LM predictor derived from the LM mode, while for non-I slices, only the non-LM predictor derived from the DIMD chroma mode can be fused with the LM predictor derived from the LM mode using equal weights.

Chroma fusion mode can be used with DIMD chroma (if selected as best non-LM mode) but any other non-LM mode may be used instead.

Using DIMD for luma and chroma improve coding efficiency of video picture. However the price to pay is an additional complexity of around 20% at the encoder and around 5% at the decoder for all intra conditions.

The problem solved by the present invention is to maintain the coding efficiency of state-of-the-art video codecs and to reduce their complexity when DIMD is used for luma and chroma.

At least one exemplary embodiment of the present application has been devised with the foregoing in mind.

SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of decoding a block of samples of a video picture, the method comprising determining an intra-prediction mode for decoding the block of samples according to an analysis of gradients of samples located in at least one template area defined around the block of samples by calculating one histogram of gradients, where each entry of the histogram of gradients corresponds to an angular intra-prediction mode, by filtering samples of the at least template area, said filtering using filtering windows centered at middle line sample positions of the at least one template area; selecting at most two angular intra-prediction modes by comparing amplitudes of angular intra-prediction modes in the histogram of gradients ; determining the intra-prediction mode from the at most two selected angular intra-prediction modes; wherein an integer number of middle line sample positions of the at least one template area at which the filtering windows are centered, is lower than a total integer number of middle line sample positions of the at least one template area.

According to a first aspect of the present application, there is provided a method of encoding a block of samples of a video picture, the method comprising determining an intra-prediction mode for decoding the block of samples according to an analysis of gradients of samples located in at least one template area defined around the block of samples by calculating one histogram of gradients, where each entry of the histogram of gradients corresponds to an angular intra-prediction mode, by filtering samples of the at least one template area, said filtering using filtering windows centered at middle line sample positions of the at least one template area; selecting at most two angular intra-prediction modes by comparing amplitudes of angular intra-prediction modes in the histogram of gradients; determining the intra-prediction mode from the at most two selected angular intra-prediction modes; wherein an integer number of middle line sample positions of the at least one template area at which the filtering windows are centered, is lower than a total integer number of middle line sample positions of the at least one template area.

In one exemplary embodiment, the histogram of gradient for chroma components of the video picture is calculated by filtering only chroma samples of the at least one template area.

In one exemplary embodiment, at least one of the at least one template area comprises samples along a bottom frontier of a neighbouring above Virtual Pipeline Data Unit and along a right frontier of a neighbouring left virtual Pipeline Data Unit.

In one exemplary embodiment, at least one of the at least one template area comprises all luma samples on a border of the neighbour virtual Pipeline Data Units.

In one exemplary embodiment, the template area comprises a subset of luma samples on a border of the neighbour virtual Pipeline Data Units.

In one exemplary embodiment, one histogram of gradients is calculated for each chroma component of the video picture.

In one exemplary embodiment, each histogram of gradients for a chroma component of the video picture is calculated from luma and chroma samples of template areas.

In one exemplary embodiment, the chroma samples of the template are multiplied by a compensation coefficient that depends on a chroma sub-sampling defined by a video picture format.

In one exemplary embodiment, the middle line sample positions of at least one of the at least one template area at which the filtering windows are centered, are determined to locate the filtering windows on 1 out of a forth number (N4) of the middle line sample positions of the template area.

In one exemplary embodiment, the middle line sample positions of at least one of the at least one template area at which the filtering windows are centered, are determined to avoid any overlap between the filtering windows.

In one exemplary embodiment, the filtering windows have different sizes.

In one exemplary embodiment, the filtering windows size depends on the size of the block of samples and sample of the template area availability.

According to a third aspect of the present application, there is provided an apparatus comprising means for performing one of the method according to the first and/or second aspect of the present application.

According to a forth aspect of the present application, there is provided a non-transitory storage medium carrying instructions of program code for executing a method according to the first and/or second aspect of the present application.

The specific nature of at least one of the exemplary embodiments as well as other objects, advantages, features and uses of said at least one of exemplary embodiments will become evident from the following description of examples taken in conjunction with the accompanying drawings.

BRIEF DESCRIPTION OF THE DRAWINGS

Reference will now be made, by way of example, to the accompanying drawings which show exemplary embodiments of the present application, and in which:

**Figure 1** shows an example of coding-tree unit in accordance with HEVC;

**Figure 2** shows an example of partitioning coding units into prediction units in accordance with HEVC;

**Figure 3** shows an example of a CTU division in accordance with WC;

**Figure 4** shows examples of split modes supported in the multi-type tree partitioning in accordance with WC;

**Figure 5** shows a schematic block diagram of steps of a method 100 of encoding a video picture VP in accordance with prior art;

**Figure 6** shows a schematic block diagram of steps of a method 200 of decoding a video picture VP in accordance with prior art;

**Figure 7** illustrates schematically a block diagram of a method 300 of deriving a DIMD luma mode in accordance with prior art;

**Figure 8** illustrates a L-shaped template area;

**Figure 9** illustrates an example of a HoG;

**Figure 10** shows schematically a method of blending multiple luma predictors in accordance with prior art;

**Figure 11** illustrates schematically a block diagram of a method 400 of deriving a DIMD chroma mode in accordance with prior art;

**Figure 12** shows schematically examples of co-located luma samples of a chroma block in accordance with prior art;

**Figure 13** shows schematically other examples of co-located luma samples of a chroma block in accordance with prior art;

**Figure 14** illustrates schematically a block diagram of a method 500 of deriving a DIMD mode in accordance with an exemplary embodiment;

**Figure 15** illustrates schematically positions of filtering windows (step 510) in accordance with an exemplary embodiment;

**Figure 16** illustrates schematically positions of filtering windows (step 510) in accordance with an exemplary embodiment;

**Figure 17** illustrates schematically positions of filtering windows (step 510) in accordance with an exemplary embodiment;

**Figure 18** illustrates for VPDU and a L-shaped template area around the current VPDU in accordance with an exemplary embodiment;

**Figure 19** illustrates for L-shaped template area when VPDU are used in accordance with an exemplary embodiment;

**Figure 20** illustrates for L-shaped template area when VPDU are used in accordance with an exemplary embodiment;

**Figure 21** illustrates schematically a block diagram of a method 600 to build a HoG for chroma DIMD derivation in accordance with an exemplary embodiment; and

**Figure 22** illustrates a schematic block diagram of an example of a system in which various aspects and exemplary embodiments are implemented.

Similar or same elements are referenced with the same reference numbers.

DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

At least one of the aspects generally relates to video picture encoding and decoding, one other aspect generally relates to transmitting a bitstream provided or encoded and one other aspects relates to receiving/accessing a decoded bitstream.

At least one of the exemplary embodiments is described for encoding/decoding a video picture but extends to the encoding/decoding of video pictures (sequences of pictures) because each video picture is sequentially encoded/decoded as described below.

Moreover, the at least one exemplary embodiments are not limited to MPEG standards such as AVC (ISO/IEC 14496-10 Advanced Video Coding for generic audio-visual services, ITU-T Recommendation H.264, https://www.itu.int/rec/T-REC-H.264-202108-P/en), EVC (ISO/IEC 23094-1 Essential video coding), HEVC (ISO/IEC 23008-2 High Efficiency Video Coding, ITU-T Recommendation H.265, https://www.itu.int/rec/T-REC-H.265-202108-P/en, VVC (ISO/IEC 23090-3 Versatile Video Coding, ITU-T Recommendation H.266, https://www.itu.int/rec/T-REC-H.266-202008-I/en but may be applied to other standards and recommendations such as AV1 (AOMedia Video 1, http://aomedia.org/av1/specification/) for example. The at least one exemplary embodiment may apply to pre-existing or future-developed, and extensions of any such standards and recommendations. Unless indicated otherwise, or technically precluded, the aspects described in the present application may be used individually or in combination.

Generally speaking, the present application relates to decoding a block of samples of a video picture in which a DIMD mode is derived for luma and chroma samples of a sample block to be predicted by filtering samples of at least one template area, said filtering using filtering windows centered at middle line sample positions of the at least one template area filtering samples in at least one shaped template area. An integer number of middle line sample positions of the at least one template area on which the filtering window are centered, is lower than a total integer number of middle line sample positions of the at least one template area.

This reduces resource requirements (memory and computing power, complexity) for deriving the DIMD mode for both luma and chroma samples of the block to be predicted compared to the resources require by the current DIMD mode derivation method.

The following exemplary embodiments are described using a L-shaped template area composed of left, above and above-left reconstructed samples of reconstructed area adjacent to a current block. But the present invention extends to template areas composed of only left reconstructed samples of reconstructed area adjacent to a current block, or template area composed of only above reconstructed samples of reconstructed area adjacent to a current block.

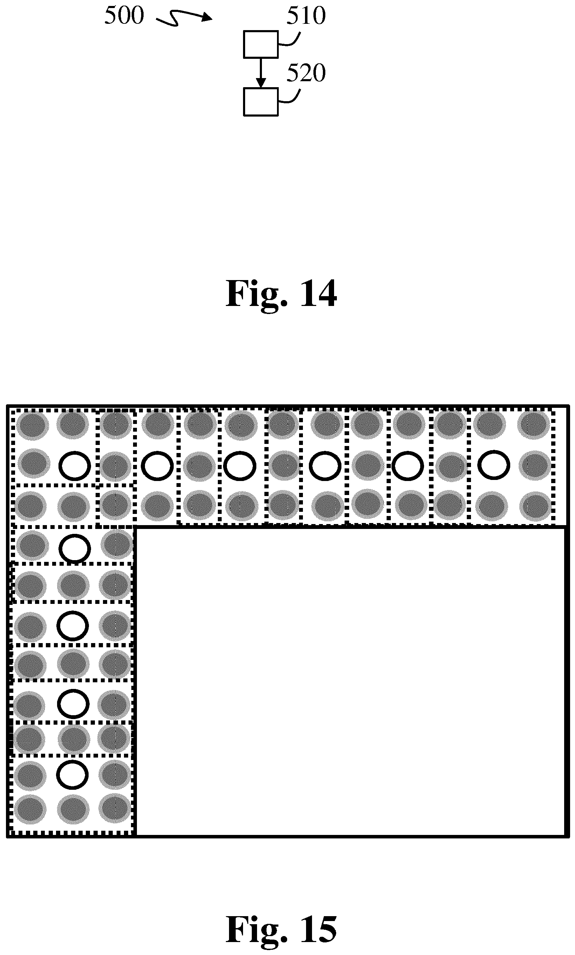

**Figure 14** illustrates schematically a block diagram of a method 500 of deriving a DIMD mode in accordance with an exemplary embodiment.

The method 500 may apply both in method 100 (encoding) and method 200 (decoding) for intra-prediction of a block.

In step 510, middle line sample positions of a L-shaped template area T1 is determined. The integer number N1 of the middle line sample positions of the L-shaped template area T1 at which the filtering window are centered, is lower than the total number of middle line sample positions of the L-shaped template area.

In step 520, a luma DIMD mode is derived from method 300 in which the filtering windows are centered at each of the N1 middle line sample positions of a L-shaped template area T1.

In one variant of step 520, middle line sample positions of a L-shaped template area T2 of co-located reconstructed luma samples is determined. Middle line sample positions of a L-shaped template area T3 of available chroma samples is determined. The number N2, respectively N3, of middle line sample positions of a L-shaped template area T2, respectively T3, at which the filtering windows are centered, is lower than the total number of middle line sample positions of the L-shaped template area T2, respectively T3. A chroma DIMD mode is derived from method 400 in which the filtering windows are centered at each of the N2 middle line sample positions of the L-shaped template area T2 and at each of the N3 middle line sample positions of the L-shaped template area T3.

In one exemplary embodiment of step 510, the middle line sample positions of at least one of the at least one L-shaped template area (T1, T2, T3) at which the filtering windows are centered, are determined to locate the filtering windows on 1 out of a number N4 (N4 >= 2) of the middle line sample positions of the L-shaped template area T1, T2 or T3.

**Figure 15** illustrates schematically an example of positions of filtering windows centered on determined middle line sample positions (white circles) when N1=2. The filtering windows are represented by dash lines.

In one exemplary embodiment of step 510, the middle line sample positions of at least one of the at least one L-shaped template area (T1, T2, T3) at which the filtering windows are centered, are determined to avoid any overlap between the filtering windows.

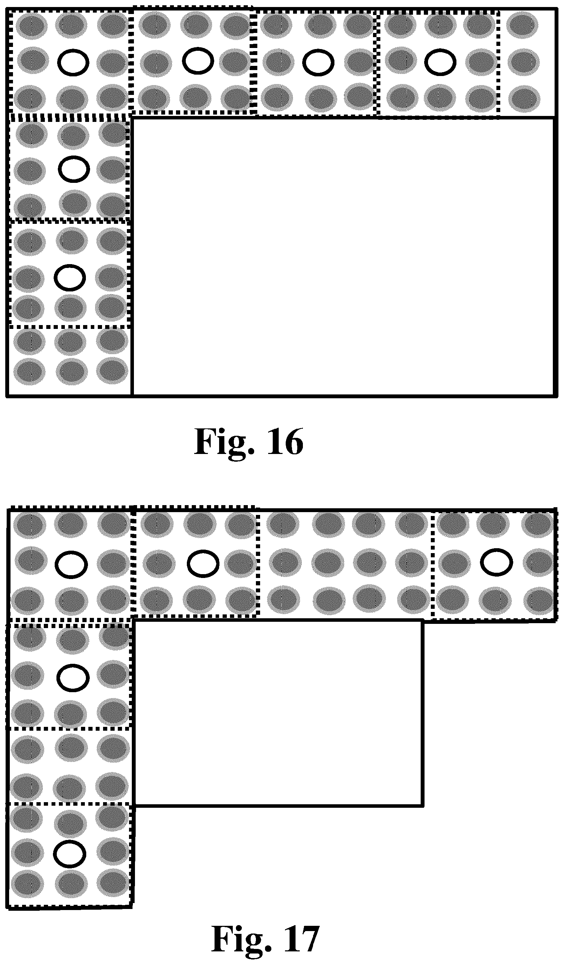

**Figure 16** illustrates schematically an example of positions of filtering windows centered on determined middle line sample positions (white circles). The filtering windows are represented by dash lines.

In one exemplary embodiment of step 510, the middle line sample positions of at least one of the at least one L-shaped template area (T1, T2, T3) at which the filtering windows are centered, are determined to allow the filtering windows to have a common border. These middle line sample positions of a L-shaped template area may then be determined among the above-left, above and top locations of the L-shaped template area.

**Figure 17** illustrates schematically an example of positions of filtering windows centered on determined middle line sample positions (white circles). The filtering windows are represented by dash lines.

In one exemplary embodiment of method 500, the filtering window size is greater than 3x3 in order to compensate for the reduced number of filtered samples (i.e. reduced number of HoG entries). For instance, a filter of size 5x5 is employed.

In one exemplary embodiment of method 500, the filtering windows have different sizes.

In one exemplary embodiment of method 500, the filtering windows size depends on the size of the block of to be predicted and sample of the L-shaped template area availability.

For example, depending on samples availability, the filtering window size is increased for the L-shaped template area in the larger dimension of the block (possibly when the block size exceeds a predetermined size, for instance 8x8).

Previous exemplary embodiments for determining the middle line sample positions of a L-shaped template area at which the filtering windows are centered, and filtering window size may be combined.

For example, a filtering window is of size 5x5 for samples in a L-shaped template area adjacent to the longer block size and the authorized middle line sample positions are on specific positions or located at a uniformly spaced positions or located at positions where filtering windows are not overlapping.

As the number middle line sample positions is reduced (step 510) and may be less representative of the directions present in the vicinity of the current block to be predicted, in one exemplary embodiment, the blending weights derivation (for luma) is modified so that instead of computing the weights $w_1$ and $w_2$ by equation (1), the weights $w_1$ and $w_2$ are computed as follows:

If the amplitude of the first angular intra-prediction mode M1 is greater than twice the amplitude of the second angular intra-prediction mode M2 then the second weight $w_2$ equal 0 and, for example $w_1 = \dfrac{43}{64}$ and $w_3$ = 21/64.

In one variant, the third weight $w_3$ equal 0 and $w_1 = \dfrac{64}{64}$.

If the amplitude of the first angular intra-prediction mode M1 is lower than or equal twice the amplitude of the second angular intra-prediction mode M2, then the second weight $w_2$ is not equal to 0.

For example $w_1 = w_2 = w_3 = \dfrac{21}{64}$.

In one variant, the third weight is equal to 0 and for example, $w_1 = \dfrac{32}{64}$ and $w_3$ = 32/64.

As discussed above in the introducing part, chroma samples in the L-shaped template area and co-located reconstructed luma samples in a L-shaped template are used to build the HoG. This requires luma samples to be firstly coded and decoded prior to coding chroma with DIMD chroma tool adding latency of the encoding/decoding methos 100 and 200. Besides, in case DIMD luma mode would not be enabled to predict a luma block, the method for deriving DIMD chroma mode shall either way calculate HoG from co-located reconstructed luma samples to obtain a DIMD chroma predictor. According to hardware architectures design, the computation of HoG from co-located reconstructed luma samples may be repeated and redundant between derivation of DIMD luma mode and DIMD chroma mode.

In one exemplary embodiment of method 500, for deriving a DIMD mode for a chroma component of the video picture, the HoG is calculated only according to filtered chroma samples of the L-shaped template area.

This exemplary embodiment applies only for deriving DIMD chroma mode.

This exemplary embodiment is advantageous because it avoids encoding and decoding of luma samples prior to coding chroma samples by using DIMD chroma mode. This exemplary embodiment is also advantageous because of its low complexity, low latency and requires less computing power and memory compared to the method that used both collocated reconstructed luma and chroma samples.

In VVC, Virtual Pipeline Data Unit (VPDU) is a concept of non-overlapping units of samples, typically of size 64x64 for luma and 32x32 for chroma. The goal is to ensure the VPDU is fully processed before starting the processing of next VPDU so that memory footprint of hardware implementation is kept reasonable. VPDU may have a strong impact on tools design.

Thus, when VPDU is considered in the design of chroma DIMD and when the building of the HoG for deriving the DIMD predictor uses not only chroma samples present in the available template areas but also luma samples (such as discussed above), these luma samples are taken out of a current VPDU VPDUc so that luma samples are completely processed and available.

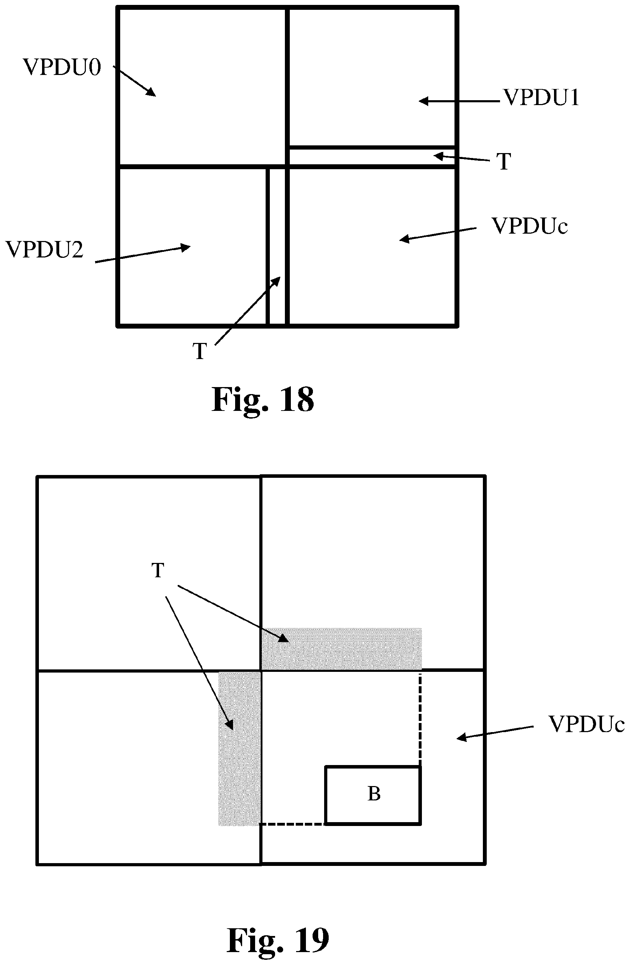

In one exemplary embodiment of method 500, at least one of the at least one L-shaped template area comprising luma samples (for example the at least 3 samples width) along the bottom VPDU frontier of the neighbouring above VPDU (VPDU1 on **Figure 18)** and along the right VPDU frontier of the neighbouring left VPDU (VPDU2 on **Figure 18)** is employed.

This exemplary embodiment decreases latency of method 500.

In one variant, at least one of the at least one L-shaped template area comprises all (i.e. 64x2 in VVC design or 64x3 with a width of 3) luma samples on a border of the neighbour VPDUs VPDU1 and VPDU2 **(Figure 19)**. All these luma samples are used in the building of the HoG instead of using neighbouring co-located luma samples.

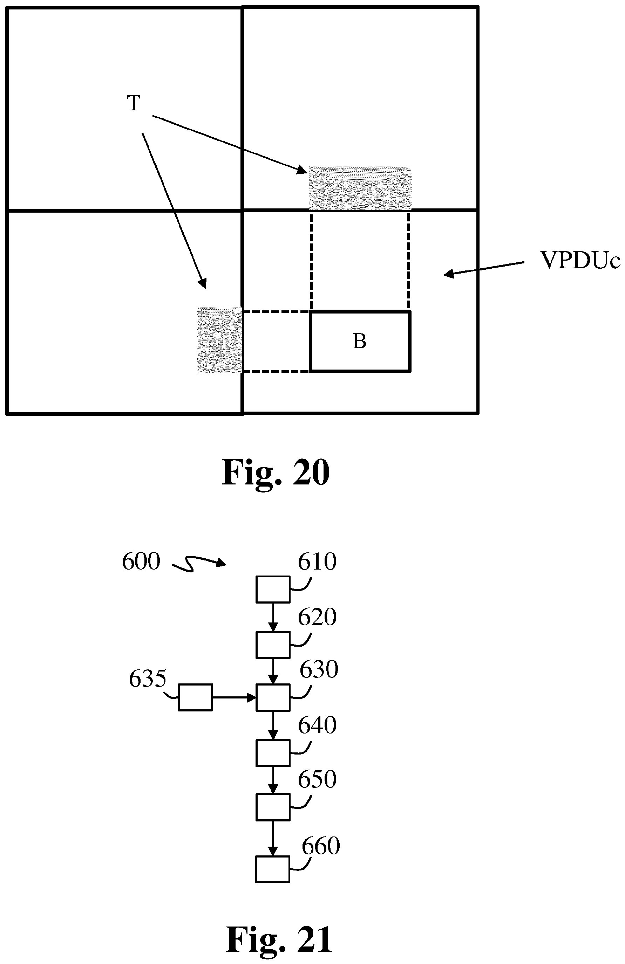

In one variant, a subset of the luma samples on a border of the neighbour VPDUs VPDU1 and VPDU2 **(Figure 20)** is used. These luma samples are used in the building of the HoG instead of using neighbouring co-located luma samples.

In one variant, in case subset of luma samples belonging to a border of 3 samples width of the neighbouring VPDU are used, this subset corresponds to luma samples co-located with (part of) orthogonal projections of the chroma block on the neighbouring VPDUs as shown by **Figures 18, 19 and 20**.

Only luma samples of current VPDU VPDUc are used in the building of HoG for deriving chroma DIMD predictor.

In case neighbouring VPDU is not present, chroma samples present in L-shaped template areas are used alone to build the HoG.

In one exemplary embodiment of method 500, one HoG is calculated for each chroma component of the video picture.

This exemplary embodiment allows parallelisation for calculating HoG per chroma component and thus improves latency of method 500.

Moreover, this exemplary embodiment improves signal adaptation by separating HoG building for chroma components and consequently final intra prediction mode which is independently allocated to each chroma component when chroma DIMD is enabled.

This exemplary embodiment further provides additional flexibility in the design as the final intra prediction mode selected for each chroma component can be different. This exemplary embodiment does not require other coding tools to act separately on chroma coding blocks or component. The advantage is that no extra signalling (more than DIMD chroma flag) is required for the modes of both components.

**Figure 21** illustrates schematically a block diagram of a method 600 to build a HoG for chroma DIMD derivation in accordance with an exemplary embodiment.

In this exemplary embodiment, the available chroma samples in a L-shaped template area and the available reconstructed co-located luma samples in a L-shaped template area are used in the building of each chroma component HoG.

However, as in non-4:4:4 signals chroma samples are less than luma samples, a compensation coefficient is introduced in the HoG building.

In step 610, a current filtering window W is considered.

In step 620, a horizontal Dx and a vertical Dy gradients are computed by applying horizontal and vertical edge detection filters such as horizontal and vertical 3x3 Sobel filters.

In step 635, a compensation coefficient is determined according to signal chroma sub-sampling as defined by a video picture format.

For example, the compensation coefficient is equal to 2 for 4:2:0 signals, 1.5 for 4:2:2 signals and 1 for a 4:4:4 signal.

In one variant, this compensation coefficient is multiple of 2 for 4:2:0 signals, 1.5 for 4:2:2 signals and 1 for a 4:4:4 signal.

Alternatively, for 4:2:0 signals, one out of two (uniformly spaced) luma samples of the L-shaped template area are used as centres of the filtering windows for building the HoG (as in **Figure 15)** so that the number of processed middle line luma samples is equal to the number of processed chroma samples (for each chroma component).

In one variant of this exemplary embodiment of **Figure 21,** only the available chroma samples in a L-shaped template area are used in the building of each chroma component HoG. Filtering window positions are then added in order to compensate for the lack of samples. Typically, the third row or column of chroma samples is also used as a centred filtering window position for building each chroma HoG.

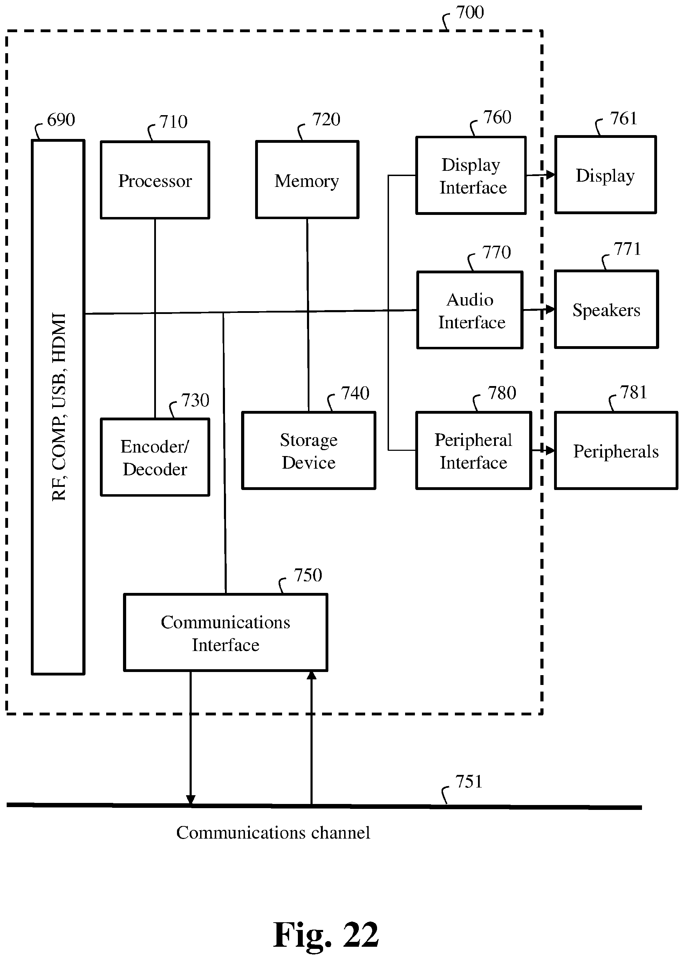

**Figure 22** shows a schematic block diagram illustrating an example of a system 700 in which various aspects and exemplary embodiments are implemented.

System 700 may be embedded as one or more devices including the various components described below. In various exemplary embodiments, system 700 may be configured to implement one or more of the aspects described in the present application.

Examples of equipment that may form all or part of the system 700 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 700, singly or in combination, may be embodied in a single integrated circuit (IC), multiple ICs, and/or discrete components. For example, in at least one exemplary embodiment, the processing and encoder/decoder elements of system 700 may be distributed across multiple ICs and/or discrete components. In various exemplary embodiments, system 700 may be communicatively coupled to other similar systems, or to other electronic devices, via, for example, a communications bus or through dedicated input and/or output ports.

System 700 may include at least one processor 710 configured to execute instructions loaded therein for implementing, for example, the various aspects described in the present application. Processor 710 may include embedded memory, input output interface, and various other circuitries as known in the art. System 700 may include at least one memory 720 (for example a volatile memory device and/or a non-volatile memory device). System 700 may include a storage device 740, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 740 may include an internal storage device, an attached storage device, and/or a network accessible storage device, as non-limiting examples.

System 700 may include an encoder/decoder module 730 configured, for example, to process data to provide encoded/decoded video picture data, and the encoder/decoder module 730 may include its own processor and memory. The encoder/decoder module 730 may represent module(s) that may be included in a device to perform the encoding and/or decoding functions. As is known, a device may include one or both encoding and decoding modules. Additionally, encoder/decoder module 730 may be implemented as a separate element of system 700 or may be incorporated within processor 710 as a combination of hardware and software as known to those skilled in the art.

Program code to be loaded onto processor 710 or encoder/decoder 730 to perform the various aspects described in the present application may be stored in storage device 740 and subsequently loaded onto memory 720 for execution by processor 710. In accordance with various exemplary embodiments, one or more of processor 710, memory 720, storage device 740, and encoder/decoder module 730 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 710 and/or the encoder/decoder module 730 may be used to store instructions and to provide working memory for processing that may be performed during encoding or decoding.

In other exemplary embodiments, however, a memory external to the processing device (for example, the processing device may be either the processor 710 or the encoder/decoder module 730) may be used for one or more of these functions. The external memory may be the memory 720 and/or the storage device 740, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 700 may be provided through various input devices as indicated in block 790. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 790 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 700 to other electronic devices across USB and/or HDMI connections. It is to be understood that various aspects of input processing, for example, Reed-Solomon error correction, may be implemented, for example, within a separate input processing IC or within processor 710 as necessary. Similarly, aspects of USB or HDMI interface processing may be implemented within separate interface ICs or within processor 710 as necessary. The demodulated, error corrected, and demultiplexed stream may be provided to various processing elements, including, for example, processor 710, and encoder/decoder 730 operating in combination with the memory and storage elements to process the data stream as necessary for presentation on an output device.

Various elements of system 700 may be provided within an integrated housing. Within the integrated housing, the various elements may be interconnected and transmit data therebetween using suitable connection arrangement 790, for example, an internal bus as known in the art, including the I2C bus, wiring, and printed circuit boards.

The system 700 may include communication interface 750 that enables communication with other devices via communication channel 751. The communication interface 750 may include, but is not limited to, a transceiver configured to transmit and to receive data over communication channel 751. The communication interface 750 may include, but is not limited to, a modem or network card and the communication channel 751 may be implemented, for example, within a wired and/or a wireless medium.

Data may be streamed to system 700, in various exemplary embodiments, using a Wi-Fi network such as IEEE 802.11. The Wi-Fi signal of these exemplary embodiments may be received over the communications channel 751 and the communications interface 750 which are adapted for Wi-Fi communications. The communications channel 751 of these exemplary embodiments may be typically connected to an access point or router that provides access to outside networks including the Internet for allowing streaming applications and other over-the-top communications.

Other exemplary embodiments may provide streamed data to the system 700 using a set-top box that delivers the data over the HDMI connection of the input block 790.

Still other exemplary embodiments may provide streamed data to the system 700 using the RF connection of the input block 790.

The streamed data may be used as a way for signaling information used by the system 700. The signaling information may comprise the bitstream B and/or information such a number of pixels of 7a video picture and/or any coding/decoding setup parameters.

It is to be appreciated that signaling may be accomplished in a variety of ways. For example, one or more syntax elements, flags, and so forth may be used to signal information to a corresponding decoder in various exemplary embodiments.

System 700 may provide an output signal to various output devices, including a display 761, speakers 771, and other peripheral devices 781. The other peripheral devices 781 may include, in various examples of exemplary embodiments, one or more of a stand-alone DVR, a disk player, a stereo system, a lighting system, and other devices that provide a function based on the output of system 700.

In various exemplary embodiments, control signals may be communicated between the system 700 and the display 761, speakers 771, or other peripheral devices 781 using signaling such as AV.Link (Audio/Video Link), CEC (Consumer Electronics Control), or other communications protocols that enable device-to-device control with or without user intervention.

The output devices may be communicatively coupled to system 700 via dedicated connections through respective interfaces 760, 770, and 780.

Alternatively, the output devices may be connected to system 700 using the communications channel 751 via the communications interface 750. The display 761 and speakers 71 may be integrated in a single unit with the other components of system 700 in an electronic device such as, for example, a television.

In various exemplary embodiments, the display interface 760 may include a display driver, such as, for example, a timing controller (T Con) chip.

The display 761 and speaker 771 may alternatively be separate from one or more of the other components, for example, if the RF portion of input 790 is part of a separate set-top box. In various exemplary embodiments in which the display 761 and speakers 771 may be external components, the output signal may be provided via dedicated output connections, including, for example, HDMI ports, USB ports, or COMP outputs.

In **Figures 1-22,** various methods are described herein, and each of the methods includes one or more steps or actions for achieving the described method. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 710 or by hardware, or by a combination of hardware and software. As a non-limiting example, the exemplary embodiments may be also implemented by one or more integrated circuits. The memory 720 may be of any type appropriate to the technical environment and may be implemented using any appropriate data storage technology, such as optical memory devices, magnetic memory devices, semiconductor-based memory devices, fixed memory, and removable memory, as non-limiting examples. The processor 710 may be of any type appropriate to the technical environment, and may encompass one or more of microprocessors, general purpose computers, special purpose computers, and processors based on a multi-core architecture, as non-limiting examples.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the exemplary embodiment/implementation) is included in at least one exemplary embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiment/examples/implementation necessarily mutually exclusive of other exemplary embodiments/examples/implementation.

Reference numerals appearing in the claims are by way of illustration only and shall have no limiting effect on the scope of the claims. Although not explicitly described, the present exemplary embodiments/examples and variants may be employed in any combination or sub-combination.

When a figure. is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video picture (including possibly a received bitstream which encodes one or more video picture) in order to produce a final output suitable for display or for further processing in the reconstructed video domain.

In various exemplary embodiments, such processes include one or more of the processes typically performed by a decoder. In various exemplary embodiments, such processes also, or alternatively, include processes performed by a decoder of various implementations described in the present application, for example,

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video picture in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of decoding a block of samples of a video picture, the method comprising determining an intra-prediction mode for decoding the block of samples according to an analysis of gradients of samples located in at least one template area (T, T1, T2, T3) defined around the block of samples by :

   - calculating (320, 430) one histogram of gradients, where each entry of the histogram of gradients corresponds to an angular intra-prediction mode, by filtering samples of the at least one template area, said filtering using filtering windows (W) centered at middle line sample positions of the at least one template area;
   - selecting (330, 440) at most two angular intra-prediction modes by comparing amplitudes of angular intra-prediction modes in the histogram of gradients ;
   - determining (360, 450) the intra-prediction mode from the at most two selected angular intra-prediction modes ;

   wherein an integer number of middle line sample positions of the at least one template area at which the filtering windows are centered, is lower than a total integer number of middle line sample positions of the at least one template area.

2. A method of encoding a block of samples of a video picture, the method comprising determining an intra-prediction mode for decoding the block of samples according to an analysis of gradients of samples located in at least one template area (T, T1, T2, T3) defined around the block of samples by :

   - calculating (320, 430) one histogram of gradients, where each entry of the histogram of gradients corresponds to an angular intra-prediction mode, by filtering samples of the at least one template area, said filtering using filtering windows (W) centered at middle line sample positions of the at least one template area;
   - selecting (330, 440) at most two angular intra-prediction modes by comparing amplitudes of angular intra-prediction modes in the histogram of gradients ;
   - determining (360, 450) the intra-prediction mode from the at most two selected angular intra-prediction modes ;

wherein an integer number of middle line sample positions of the at least one template area at which the filtering windows are centered, is lower than a total integer number of middle line sample positions of the at least one template area.

3. The method of claim 1 or 2, wherein the histogram of gradient for chroma components of the video picture is calculated by filtering only chroma samples of the at least one template area.

4. The method of claim 1 or 2, wherein at least one of the at least one template area comprises samples along a bottom frontier of a neighbouring above Virtual Pipeline Data Unit (VPDU1) and along a right frontier of a neighbouring left virtual Pipeline Data Unit (VPDU2).

5. The method of claim 4, wherein at least one of the at least one template area comprises all luma samples on a border of the neighbour virtual Pipeline Data Units (VPDU1, VPDU2).

6. The method of claim 4, wherein the template area comprises a subset of luma samples on a border of the neighbour virtual Pipeline Data Units (VPDU1, VPDU2).

7. The method of claim 1 or 2, wherein one histogram of gradients is calculated for each chroma component of the video picture.

8. The method of claim 7, wherein each histogram of gradients for a chroma component of the video picture is calculated from luma and chroma samples of template areas.

9. The method of claim 8, wherein the chroma samples of the template are multiplied by a compensation coefficient that depends on a chroma sub-sampling defined by a video picture format.

10. The method of one of claims 1 to 9, wherein the middle line sample positions of at least one of the at least one template area at which the filtering windows are centered, are determined to locate the filtering windows on 1 out of a forth number (N4) of the middle line sample positions of the template area.

11. The method of one of claims 1 to 9, wherein the middle line sample positions of at least one of the at least one template area at which the filtering windows are centered, are determined to avoid any overlap between the filtering windows.

12. The method of one of claims 1 to 11, wherein the filtering windows have different sizes.

13. The method of one of claims 1 to 12, wherein the filtering windows size depends on the size of the block of samples and sample of the template area availability.

14. An apparatus comprising means for performing one of the method claimed in any one of claims 1 to 13.

15. A non-transitory storage medium carrying instructions of program code for executing a method claimed in any one of claims 1 to 13.

**Fig. 1**

**Fig. 2**

**Fig. 3**

**Fig. 4**

**Fig. 5**

**Fig. 6**

300

310

320

330

340

350

361

362

360

363

**Fig. 7**

T

R

B

**Fig. 8**

W

HoG

M1

M2

**Fig. 9**

Fig. 10

400

410

420

430

440

450

460

end

**Fig. 11**

**Fig. 12**

**Fig. 13**

500 510

520

Fig. 14

Fig. 15

Fig. 16

Fig. 17

**Fig. 18**

**Fig. 19**

**Fig. 20**

**Fig. 21**

700

690

710

Processor

720

Memory

760

Display
Interface

761

Display

RF, COMP, USB, HDMI

770

Audio
Interface

771

Speakers

730

Encoder/
Decoder

740

Storage
Device

780

Peripheral
Interface

781

Peripherals

750

Communications
Interface

751

Communications channel

Fig. 22

Europäisches
Patentamt

European
Patent Office

Office européen
des brevets

# EUROPEAN SEARCH REPORT

Application Number

EP 22 30 6424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/070451 A1 (ABDOLI MOHSEN [FR]) 3 March 2022 (2022-03-03) * paragraphs [0201], [0229], [0242] – [0252], [0260] – [0268]; figures 10a, 11a * * paragraphs [0302] – [0310], [0323], [0351] – [0358], [0368] – [0372], [0385] – [0389] * ----- | 1-15 | INV. H04N19/11 H04N19/14 H04N19/176 H04N19/593 |
| X | "Algorithm description of Enhanced Compression Model 5 (ECM 5)", 138. MPEG MEETING; 20220425 – 20220429; ONLINE; (MOTION PICTURE EXPERT GROUP OR ISO/IEC JTC1/SC29/WG11), , no. n21510 11 July 2022 (2022-07-11), XP030302659, Retrieved from the Internet: URL:https://dms.mpeg.expert/doc_end_user/d ocuments/138_OnLine/wg11/MDS21510_WG05_N00 135.zip WG5_N0135_ECM5_JVET-Z2025.docx [retrieved on 2022-07-11] * sections 3.1.5, 3.1.5.1; figure 3 * ----- | 1-15 | |
| A | US 2021/243452 A1 (ZHAO LIANG [US] ET AL) 5 August 2021 (2021-08-05) * paragraphs [0066] – [0075] * ----- -/-- | 1-15 | |

**TECHNICAL FIELDS SEARCHED (IPC)**

H04N

The present search report has been drawn up for all claims

| Place of search | Date of completion of the search | Examiner |
|---|---|---|
| Munich | 3 February 2023 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 22 30 6424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ABDOLI (ATEME) M ET AL: "Non-CE3: Decoder-side Intra Mode Derivation with Prediction Fusion", 126. MPEG MEETING; 20190325 – 20190329; GENEVA; (MOTION PICTURE EXPERT GROUP OR ISO/IEC JTC1/SC29/WG11), , no. m47002 16 March 2019 (2019-03-16), XP030210317, Retrieved from the Internet: URL:http://phenix.int-evry.fr/mpeg/doc_end _user/documents/126_Geneva/wg11/m47002-JVE T-N0342-v4-JVET-N0342-v4.zip JVET-N0342-v4.docx [retrieved on 2019-03-16] * sections 3.1, 3.2 * ----- | 1-15 | |
| A | MORA (ATEME) E ET AL: "CE3: Decoder-side Intra Mode Derivation (tests 3.1.1, 3.1.2, 3.1.3 and 3.1.4)", 13. JVET MEETING; 20190109 – 20190118; MARRAKECH; (THE JOINT VIDEO EXPLORATION TEAM OF ISO/IEC JTC1/SC29/WG11 AND ITU-T SG.16 ), , no. JVET-M0094 3 January 2019 (2019-01-03), XP030200347, Retrieved from the Internet: URL:http://phenix.int-evry.fr/jvet/doc_end _user/documents/13_Marrakech/wg11/JVET-M00 94-v2.zip JVET-M0094-v2.docx [retrieved on 2019-01-03] * section 2.2 * ----- | 1-15 | TECHNICAL FIELDS SEARCHED (IPC) |

The present search report has been drawn up for all claims

| Place of search | Date of completion of the search | Examiner |
|---|---|---|
| Munich | 3 February 2023 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6424

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| US 2022070451 | A1 | 03-03-2022 | EP | 3962080 A1 | 02-03-2022 |
| | | | US | 2022070451 A1 | 03-03-2022 |
| US 2021243452 | A1 | 05-08-2021 | CN | 113767633 A | 07-12-2021 |
| | | | EP | 3925221 A1 | 22-12-2021 |
| | | | JP | 2022529645 A | 23-06-2022 |
| | | | KR | 20210134407 A | 09-11-2021 |
| | | | US | 2021243452 A1 | 05-08-2021 |
| | | | US | 2022030252 A1 | 27-01-2022 |
| | | | WO | 2021158615 A1 | 12-08-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **K. ZHAN et al.** Enhanced Cross-component Linear Model Intra Prediction. *JVET-D0110, San Diego,* October 2016
- **M. COBAN et al.** Algorithm description of Enhanced Compression Model 4 (ECM 4). *JVET-Y2025,* July 2021
- **M. ABDOLI et al.** Non-CE3: Decoder-side Intra Mode Derivation with Prediction Fusion Using Planar. *JVET-O0449, Gothenburg,* July 2019